# FASCICULE DE BREVET EUROPEEN

(11) **EP 1 995 139 B1**
(45) Date de publication et mention de la délivrance du brevet: **14.09.2011**
(21) Numéro de dépôt: 08104025.5
(22) Date de dépôt: 20.05.2008
(51) Int. Cl.: B60T 11/16, B60T 11/236, F16J 15/32

(54) **Maître-cylindre comportant un joint et une gorge associée favorisant la réalimentation**
Hauptbremszylinder, der eine Fuge und eine entsprechende Hohlkehle zum leichteren Nachfüllen der Bremse umfasst
Master cylinder comprising a seal and an associated groove for helping the feedback

(30) Priorité: 22.05.2007 FR 0703642
(43) Date de publication de la demande: 26.11.2008
(73) Titulaire: Robert Bosch GmbH, 70442 Stuttgart (DE)
(72) Inventeur: Auguste, Antony, 94350 Villier sur Marne (FR); Gaffe, François, 93140 Bondy - France (FR); Lhuillier, Laurent, 93150 Le Blanc Mesnil (FR); Bernadat, Olivier, 94170 Le Perreux (FR)
(74) Mandataire: Hurwic, Aleksander Wiktor

(56) Documents cités:
- EP-A- 1 479 582
- WO-A-02/062642
- FR-A- 2 829 450

## Description

L'invention concerne un maître-cylindre de freinage pour un véhicule automobile.

L'invention concerne plus particulièrement un maître-cylindre de freinage pour un véhicule automobile, du type qui comporte un corps sensiblement axial à l'intérieur d'un alésage duquel est monté coulissant au moins un piston axial, qui est susceptible d'être actionné par un conducteur du véhicule entre une position arrière de repos et une position avant d'application d'un effort de freinage, et qui est rappelé élastiquement vers sa position arrière de repos, du type dans lequel l'alésage comporte deux joints d'étanchéité avant et arrière qui sont interposés entre le piston et l'alésage, le joint d'étanchéité avant délimitant dans l'alésage une chambre d'alimentation arrière et une chambre de pression avant, du type dans lequel le corps comporte un conduit radial d'alimentation qui relie un réservoir extérieur de fluide hydraulique à la chambre d'alimentation arrière et qui débouche entre les deux joints d'étanchéité, du type dans lequel le corps comporte un perçage d'alimentation d'un circuit de freinage qui débouche dans la chambre de pression avant, du type dans lequel le piston comporte un alésage ouvert vers l'avant communiquant d'une part avec la chambre de pression avant et d'autre part avec la périphérie dudit piston par l'intermédiaire d'au moins un perçage qui, lorsque le piston occupe sa position arrière de repos, est agencé entre les deux joints d'étanchéité pour mettre en communication la chambre de pression avant et la chambre d'alimentation arrière et qui, lorsque le piston est mû axialement vers l'avant vers sa position d'application, est susceptible de franchir le joint d'étanchéité avant pour isoler la chambre de pression avant de la chambre d'alimentation arrière et permettre ainsi l'établissement d'une pression de freinage dans la chambre de pression avant, du type dans lequel au moins chaque joint d'étanchéité avant est reçu dans une gorge du corps du maître cylindre et comporte trois lèvres concentriques d'orientation axiale, notamment:
- une première lèvre intérieure dont une extrémité libre est agencée au contact de la périphérie du piston,
- une deuxième lèvre centrale, dont l'extrémité libre est agencée dans une position de repos au contact d'une face avant de la gorge,
- et une troisième lèvre extérieure, dont une extrémité libre est agencée dans une position de repos au contact d'une face de fond périphérique de la gorge,
la deuxième lèvre centrale et la troisième lèvre extérieure étant susceptibles, lorsque la chambre avant de pression est soumise à une dépression causée par le retour du piston de sa position avant d'application à sa position de repos ou bien par l'activation d'un dispositif de contrôle de trajectoire faisant partie du circuit de freinage, de se décoller de la face avant et de la face périphérique de fond de la gorge pour permettre respectivement la réalimentation du réservoir à l'aide de la chambre de pression avant ou bien la réalimentation de la chambre de pression avant par le réservoir.

On connaît de nombreux exemples de maîtres cylindres de freinage de ce type notamment décrit dans WO 02/062642.

Dans la plupart des maîtres cylindres de ce type, le piston est généralement guidé dans l'alésage par l'intermédiaire d'au moins deux portées annulaires de l'alésage, qui sont agencées respectivement en avant du joint d'étanchéité avant et en arrière du joint d'étanchéité arrière.

La portée qui est agencée en avant du joint d'étanchéité avant jouxte la gorge de réception du joint d'étanchéité avant et elle comporte des rainures de dites de réalimentation qui sont destinées à permettre le passage du liquide de freinage dans les rainures lorsque la chambre avant de pression est soumise à une dépression causée par le retour du piston de sa position avant d'application à sa position de repos ou bien lorsqu'un dispositif de contrôle de trajectoire de type "ESP" du circuit de freinage est activé et crée une dépression dans la chambre avant de pression.

La gorge de réception du joint avant comporte généralement une face avant transversale droite réunie à une face arrière transversale droite par l'intermédiaire d'une face de fond périphérique. La deuxième lèvre centrale et la troisième lèvre extérieure du joint d'étanchéité avant comportent des extrémités qui sont destinées à adhérer respectivement à la face avant transversale droite et à la face de fond périphérique de la gorge.

Lorsque le joint d'étanchéité avant est soumis à une dépression, les extrémités de la deuxième lèvre centrale et de la troisième lèvre extérieure du joint d'étanchéité avant se décollent respectivement de la face avant transversale droite de la gorge et de la face de fond périphérique de la gorge, afin de permettre respectivement la réalimentation du réservoir à l'aide de la chambre de pression avant ou bien la réalimentation de la chambre de pression avant par le réservoir.

Or, on a constaté que dans bien des cas, la lèvre centrale et la troisième lèvre extérieure du joint d'étanchéité avant ne se décollent qu'imparfaitement de la face avant de la gorge et de la face de fond périphérique de la gorge. Dans ce cas, le débit de liquide de freinage est insuffisant pour que la réalimentation s'effectue correctement.

Ceci est particulièrement flagrant lorsque le véhicule est équipé d'un dispositif de contrôle de trajectoire de type "ESP" pour lequel le besoin de liquide de freinage, qui est destiné à alimenter un ou plusieurs des étriers de frein du véhicule, peut être important même lorsque le piston occupe une position d'application dans la chambre de pression. Un débit insuffisant peut conduire à un défaut d'efficacité, ou du moins à une lenteur de réaction préjudiciable du dispositif de contrôle de trajectoire de type "ESP".

Pour remédier à cet inconvénient, l'invention propose maître cylindre de freinage comportant des moyens d'augmentation du débit de réalimentation au travers du joint d'étanchéité avant.

Dans ce but, l'invention propose un maître cylindre de freinage du type décrit précédemment, caractérisé en ce que la gorge comporte un chanfrein qui s'étend de l'alésage jusqu'à au moins une partie intermédiaire de la face avant de la gorge avec laquelle l'extrémité de la deuxième lèvre centrale est en contact dans sa position de repos, et en ce que ladite extrémité de la deuxième lèvre centrale est d'une section réduite pour faciliter le décollement par basculement de la deuxième lèvre centrale afin de provoquer le décollement par basculement de la troisième lèvre extérieure dans le but de faciliter la réalimentation de la chambre de pression avant par le réservoir.

Selon d'autres caractéristiques de l'invention :
- le joint comporte une paroi de jonction réunissant les trois lèvres et ladite paroi de jonction comporte une encoche, agencée au droit de la deuxième lèvre centrale, qui est destinée à faciliter le décollement par basculement de la deuxième lèvre centrale et de la troisième lèvre extérieure,
- la deuxième lèvre centrale forme un angle d'inclinaison déterminé avec la première lèvre intérieure et la troisième lèvre extérieure selon lequel elle est inclinée vers la première lèvre intérieure.
- l'extrémité de la deuxième lèvre centrale comporte une face extérieure biseautée, tournée vers la troisième lèvre extérieure, pour former la section réduite de la deuxième lèvre centrale,
- le maître cylindre est de type tandem et il comporte dans son corps sensiblement axial un alésage à l'intérieur duquel sont montés coulissants deux pistons axiaux et deux joints d'étanchéité avant qui comportent des deuxième lèvres centrales de section réduite et des encoches, et qui sont reçus dans deux gorges chanfreinées associées.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un maître cylindre de type "tandem" selon l'invention,
- la figure 2A est une demi-vue en coupe axiale d'un joint d'étanchéité conventionnel monté dans sa gorge dans une position de repos ;
- la figure 2B est une demi-vue en coupe axiale d'un joint d'étanchéité conventionnel monté dans sa gorge dans une position de réalimentation ;
- la figure 3A est une demi-vue en coupe axiale d'un joint d'étanchéité réalisé selon un premier mode de réalisation de l'invention monté dans sa gorge dans une position de repos ;
- la figure 3B est une demi-vue en coupe axiale d'un joint d'étanchéité réalisé selon un premier mode de réalisation de l'invention monté dans sa gorge dans une position de réalimentation ;
- la figure 4A est une demi-vue en coupe axiale d'un joint d'étanchéité réalisé selon un second mode de réalisation de l'invention monté dans sa gorge dans une position de repos ;
- la figure 4B est une demi-vue en coupe axiale d'un joint d'étanchéité réalisé selon un second mode de réalisation de l'invention monté dans sa gorge dans une position de réalimentation.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

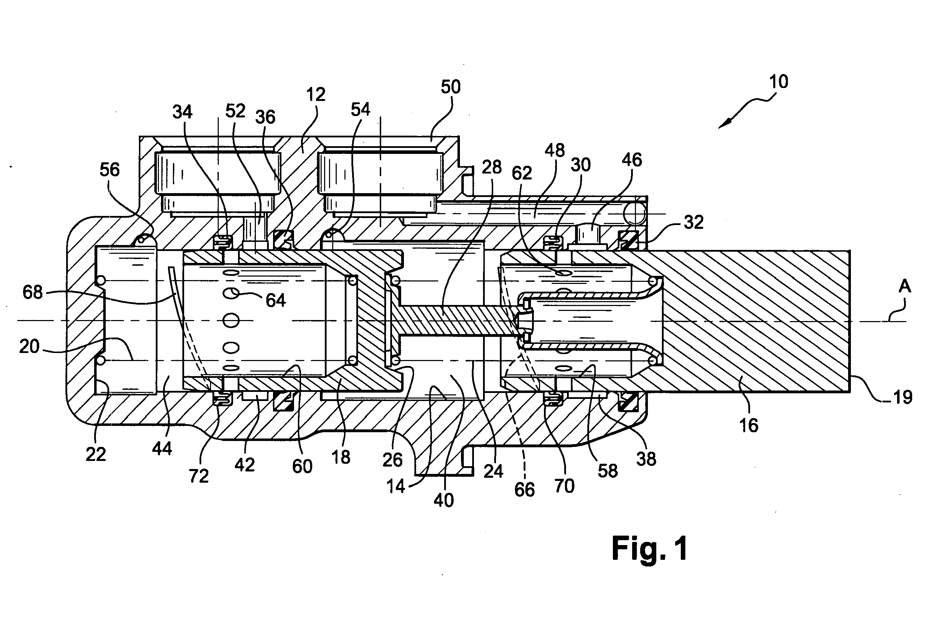

On a représenté sur la figure 1 l'ensemble d'un maître cylindre 10 de freinage pour un véhicule automobile.

De manière connue, le maître cylindre 10 comporte un corps 12 sensiblement axial d'axe "A" à l'intérieur d'un alésage 14 duquel est monté coulissant au moins un piston axial.

Dans le mode de réalisation préféré de l'invention, le maître cylindre 10 est un maître cylindre de type "tandem" qui comporte un corps 12 sensiblement axial d'axe A à l'intérieur d'un alésage 14 duquel sont montés coulissants deux pistons axiaux 16 et 18.

Cette configuration n'est toutefois pas limitative de l'invention et le maître cylindre 10 pourrait être un maître cylindre simple ne comportant qu'un seul piston coulissant.

Le piston 16, dit piston primaire 16, est destiné à permettre l'établissement d'une pression hydraulique dans un circuit primaire de freinage du véhicule (non représenté), et le piston 18, dit piston secondaire 18, est destiné à permettre l'établissement d'une pression hydraulique dans un circuit secondaire de freinage du véhicule (non représenté) qui est indépendant du circuit primaire de freinage du véhicule.

Chacun de ces deux circuits est associé à un dispositif de contrôle de trajectoire qui est susceptible de commander l'actionnement d'organes de freinages du véhicule, tels que des étriers de frein, de manière indépendante du maître cylindre.

Le piston primaire 16 est susceptible d'être actionné directement par un conducteur du véhicule. Par exemple, une extrémité arrière 19 du piston primaire 16 est susceptible d'être reliée à un servomoteur (non représenté) qui amplifie les efforts exercés sur une pédale de freinage du véhicule.

Le piston secondaire 18 est susceptible d'être actionné indirectement par le conducteur du véhicule, notamment par le piston primaire 16.

Chaque piston primaire 16 ou secondaire 18 est ainsi mobile entre une position arrière de repos, qui est représentée à la figure 1, et au moins une position avant d'application d'un effort de freinage (non représentée).

De manière connue, chaque piston primaire 16 ou secondaire 18 est rappelé élastiquement vers sa position arrière de repos, par exemple à l'encontre d'une butée (non représentée).

En particulier, le piston secondaire 18 est rappelé vers l'arrière par un ressort 20 qui prend appui sur une face 22 transversale d'extrémité avant de l'alésage 14 et sur le piston secondaire 18, et le piston primaire 16 est rappelé élastiquement vers l'arrière par un ressort 24 qui prend appui sur une face 26 transversale arrière du piston secondaire 18 et sur le piston primaire 16. Plus particulièrement, le ressort 24 étant notamment de grande longueur, il est monté autour d'un vérin coulissant 28 qui est interposé entre la face 26 transversale arrière du piston secondaire 18 et le piston primaire 16.

L'alésage 14 comporte deux joints primaires d'étanchéité avant 30 et arrière 32 qui sont interposés respectivement entre le piston primaire 16 et l'alésage 14 et deux joints secondaires d'étanchéité avant 34 et arrière 36 qui sont interposés respectivement entre le piston secondaire 18 et l'alésage 14.

De ce fait, le joint primaire d'étanchéité avant 30 délimite dans l'alésage 14 une chambre 38 d'alimentation arrière et une chambre 40 de pression avant. De même, le joint secondaire d'étanchéité avant 34 délimite dans l'alésage 14 une chambre 42 d'alimentation arrière et une chambre 44 de pression avant.

Le corps 12 comporte un conduit 46 primaire radial d'alimentation qui relie un réservoir extérieur primaire (non représenté) de fluide hydraulique à la chambre d'alimentation primaire arrière 38 et qui débouche entre les deux joints primaires d'étanchéité 30 et 32.

En particulier, le conduit 46 primaire radial d'alimentation est par exemple relié par l'intermédiaire d'un conduit longitudinal intermédiaire 48 à un orifice 50 qui débouche à l'extérieur du corps 12 et qui est destiné à recevoir une bouche de sortie (non représentée) du réservoir primaire associé.

Le corps 12 comporte un conduit 52 secondaire radial d'alimentation qui relie un réservoir extérieur secondaire (non représenté) de fluide hydraulique à la chambre d'alimentation secondaire arrière 42 et qui débouche entre les deux joints secondaires d'étanchéité 34 et 36.

Le corps comporte encore deux perçages primaire 54 et secondaire 56 d'alimentation des circuits de freinage primaire et secondaires associés qui débouchent dans les chambres avant de pression primaire 40 et secondaire 44 associées.

Entre autres modes de réalisation connus de l'état de la technique, chaque piston 16, 18 comporte un alésage 58, 60 ouvert vers l'avant communiquant d'une part avec la chambre 40, 44 de pression avant associée et d'autre part avec la périphérie dudit piston 16,18 par l'intermédiaire d'au moins un perçage 62, 64 dont la position par rapport au joint d'étanchéité associé avant primaire ou secondaire 30, 34 détermine la mise en communication sélective des chambres arrière d'alimentation primaire et secondaire 38, 42 avec les chambres de pression avant primaire et secondaire 40, 44.

En effet, lorsque le piston 16, 18 occupe sa position arrière de repos de la figure 1, le perçage associé 62, 64 est agencé entre les deux joints d'étanchéité primaire 30, 32 et secondaire 34, 36 pour mettre en communication la chambre de pression avant 40, 44 et la chambre d'alimentation arrière 38, 42.

Lorsque le piston 16, 18 est mû axialement vers l'avant vers sa position d'application (non représentée), le perçage 62, 64 franchit le joint d'étanchéité avant 30, 34 pour isoler la chambre de pression avant 40, 44 de la chambre d'alimentation arrière 38, 42, ce qui permet l'établissement d'une pression de freinage dans chaque chambre de pression avant 40, 44.

Par ailleurs, comme l'illustre la figure 1, chaque joint d'étanchéité avant 30, 34 est reçu dans une gorge associée 70, 72 du corps 12 du maître cylindre.

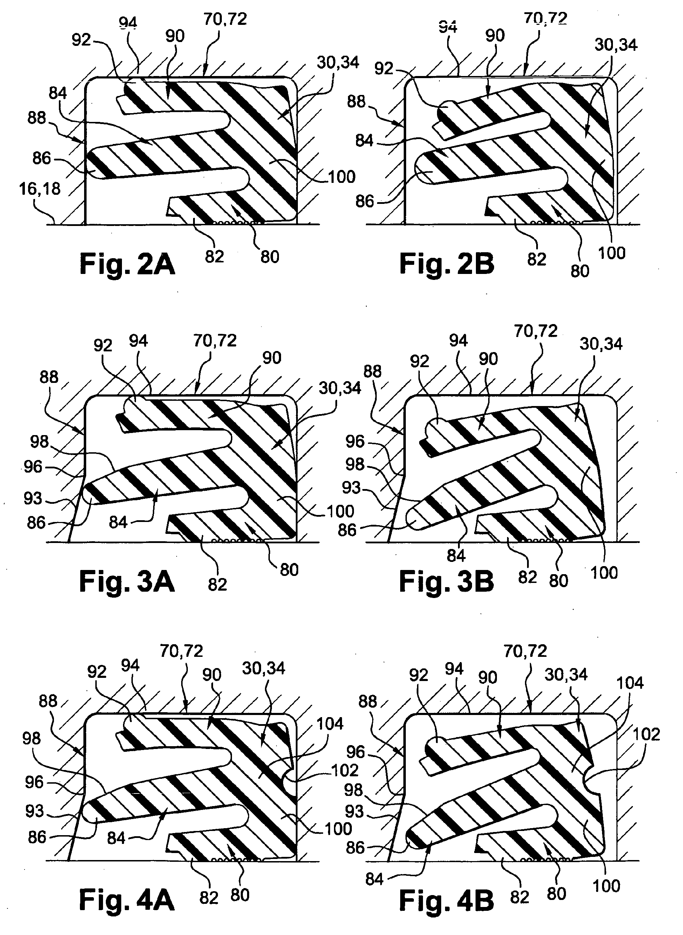

Comme l'illustrent les figures 2 et suivantes, chaque joint d'étanchéité avant 30, 34 comporte trois lèvres concentriques d'orientation axiale, notamment :
- une première lèvre intérieure 80 dont une extrémité libre 82 est destinée à être agencée au contact de la périphérie du piston 16, 18,
- une deuxième lèvre centrale 84, dont l'extrémité libre 86 est agencée dans une position de repos au contact d'une face 88 avant de la gorge 70,72,
- et une troisième lèvre extérieure 90, dont une extrémité 92 libre est agencée dans une position de repos au contact d'une face 94 de fond périphérique de la gorge 70,72.

Lorsque le piston 16, 18 revient de sa position avant d'application à sa position de repos, ou lorsqu'un dispositif de contrôle de trajectoire faisant partie du circuit de freinage et relié au circuits de freinage primaire et secondaire est activé, il se crée une dépression dans les chambres de pression avant primaire et secondaire 40, 44 qui conduisent la deuxième lèvre centrale 84 et la troisième lèvre extérieure 90 à se décoller de la face avant 88 et de la face 94 périphérique de fond de la gorge 70, 72 pour permettre la réalimentation de la chambre de pression avant 40, 44 par le réservoir.

D'une manière analogue, le décollement des lèvres 84, 90 des joints 30, 34 permet la réalimentation des chambres de pression avant primaire et secondaire 40, 44 par les conduits primaire 46 et secondaire 52 radiaux d'alimentation, et donc par les réservoirs associés, lorsqu'un dispositif de contrôle de trajectoire du circuit de freinage relié au circuits de freinage primaire et secondaire est activé.

La réalimentation est par ailleurs rendue possible en avant des joints 30, 34 par une rainure 66, 68, qui est formée dans l'alésage en avant d'une gorge 70, 72 de réception du joint 30, 34 d'étanchéité avant.

Conventionnellement, la face avant 88 de la gorge 70, 72 est une face transversale droite.

Or, on a constaté que dans bien des cas, la deuxième lèvre centrale 84 et la troisième lèvre extérieure 90 des joints 30, 34 d'étanchéité avant ne se décollent qu'imparfaitement de la face avant 88 de la gorge 70, 72 et de la face 94 de fond périphérique de la gorge. Dans ce cas, le débit de liquide de freinage est insuffisant pour que la réalimentation s'effectue correctement.

Pour remédier à cet inconvénient, l'invention propose des moyens destinés à faciliter le décollement respectif de la deuxième lèvre centrale 84 et de la troisième lèvre extérieure 90 de la face avant 88 de la gorge 70, 72.

A cet effet, l'invention propose une gorge 70, 72 qui comporte un chanfrein 93 qui s'étend de l'alésage 14 jusqu'à au moins une partie intermédiaire 96 de la face avant 88 de la gorge 70, 72, avec laquelle l'extrémité 86 de la deuxième lèvre centrale 84 est en contact dans sa position de repos, comme illustré aux figures 3A et 4A. L'invention propose aussi une configuration particulière de l'extrémité 86 de la deuxième lèvre centrale 84.

Plus particulièrement, l'extrémité 86 de la deuxième lèvre centrale 84 est d'une section réduite pour faciliter le décollement par basculement de la deuxième lèvre centrale 84, comme représenté aux figures 3B et 4B, ceci afin de faciliter aussi le décollement par basculement de la troisième lèvre extérieure 90, dans le but de faciliter la réalimentation du réservoir à l'aide de la chambre de pression avant 40, 44 ou bien la réalimentation de la chambre de pression avant 40, 44 par le réservoir.

Par ailleurs, dans le mode de réalisation préféré de l'invention, la deuxième lèvre centrale 84 forme un angle d'inclinaison déterminé avec la première lèvre intérieure 80 et la troisième lèvre 90 extérieure selon lequel elle est inclinée vers la première lèvre intérieure 80. Cette configuration est destinée à favoriser le basculement de la deuxième lèvre centrale 84.

Ainsi, comme l'illustrent les figures 3A et 4A, dans la position de repos du joint d'étanchéité avant 30, 34, l'extrémité 86 de la deuxième lèvre centrale 84 du joint 30, 34 est agencée sensiblement en contact de la partie intermédiaire 96 de la face avant 88 de la gorge 70, 72, cette partie intermédiaire 96 étant agencée immédiatement à proximité du chanfrein 93 de la gorge 70,72.

De ce fait, lorsque le joint d'étanchéité avant 30, 34 est soumis à une dépression, l'extrémité 86 de la deuxième lèvre centrale 84 du joint 30, 34 quitte instantanément la face avant 88 de la gorge 70, 72 et le dégagement constitué par le chanfrein 93 offre ainsi un large passage au fluide hydraulique.

Par ailleurs, le basculement de la deuxième lèvre centrale 84 du joint d'étanchéité avant 30, 34 permet une déformation globale du joint 30, 34 qui provoque le décollement par basculement de la troisième lèvre extérieure 90 du joint d'étanchéité avant 30, 34 et le décollement de son extrémité 92 de la face de fond 94 de la gorge 70,72. Le dégagement constitué par le basculement de l'extrémité 92 de la troisième lèvre extérieure 90 offre aussi un large passage au fluide hydraulique.

Dans le mode de réalisation préféré de l'invention, l'extrémité 86 de la deuxième lèvre centrale 84 comporte une face extérieure 98 biseautée, tournée vers la troisième lèvre extérieure 90, qui est destinée à former la section réduite de la deuxième lèvre centrale 84.

Il sera compris que cette disposition n'est pas limitative de l'invention et que tout moyen visant à réduire la section de la deuxième lèvre centrale 84 peut convenir à la bonne mise en oeuvre de l'invention.

A titre d'exemple, un premier mode de réalisation de l'invention comportant un joint 30,34 avant muni d'une deuxième lèvre centrale 84 dont l'extrémité 86 comporte une face extérieure biseautée 98 a été représenté aux figures 3A et 3B.

Avantageusement, un second mode de réalisation de l'invention qui a été représenté aux figures 4A et 4B propose une conformation particulière d'une paroi de jonction 100 qui réunit les trois lèvres 80, 84, et 90 du joint d'étanchéité avant 30, 34.

Conformément à l'invention, dans cette configuration, la paroi 100 de jonction comporte une encoche 102 qui est agencée sensiblement au droit de la deuxième lèvre centrale 84, et qui est destinée à faciliter le décollement par basculement de la deuxième lèvre centrale 84 et de la troisième lèvre extérieure 90.

En effet, comme l'illustre la figure 4B, lorsque le joint avant 30, 34 est soumis à une dépression, le basculement par décollement de la deuxième lèvre centrale 84 provoque une torsion du joint avant 30,34 autour d'une base 104 de la deuxième lèvre extérieure 84 qui est agencée à proximité immédiate de l'encoche 102.

Cette torsion provoque une déformation du joint 30,34, accentuée par la présence de l'encoche 102, formant une zone de moindre résistance du joint 30, 34, qui conduit à un basculement accru de la troisième lèvre extérieure 90 du joint avant d'étanchéité avant 30, 34.

De la sorte, le fluide hydraulique chemine successivement d'une part par le dégagement formé entre l'extrémité 86 de la deuxième lèvre centrale 84 et le chanfrein 93, et d'autre part par le dégagement formé entre l'extrémité 92 de la troisième lèvre extérieure 90 et la face de fond 94 périphérique de la gorge 70,72.

Il sera compris que plus la dimension de l'encoche 102 est élevée, sans pour autant compromettre la résistance du joint 30, 34 d'étanchéité avant, plus la torsion du joint 30, 34 est importante et donc meilleure est la réalimentation.

Il sera par ailleurs bien entendu compris que la conformation de la face supérieure biseautée 98 de la deuxième lèvre centrale 86 et la réalisation de l'encoche 102 de la paroi de jonction 100 du joint avant 30,34 peuvent trouver à s'appliquer en conjonction pour la réalisation d'un joint d'étanchéité avant 30,34, mais aussi indépendamment, le joint d'étanchéité avant 30, 34 comportant alors l'une ou l'autre de ces caractéristiques.

L'invention trouve naturellement à s'appliquer à un maître cylindre 10 de type tandem qui comporte dans son corps 12 sensiblement axial un alésage 14 à l'intérieur duquel sont montés coulissant deux pistons axiaux 16,18 et deux joints 30,34 d'étanchéité avant qui comportent des deuxièmes lèvres centrales 84 de section réduite et des encoches 102 associées, et qui sont reçus dans deux gorges 70, 72 comportant des chanfreins 93.

L'invention permet donc de disposer d'un maître-cylindre permettant des réalimentations rapides des réservoirs de liquide de freinage et/ou des circuits de freinage associés.

## Revendications

1. Maître-cylindre (10) de freinage pour un véhicule automobile, du type qui comporte un corps (12) sensiblement axial à l'intérieur d'un alésage (14) duquel est monté coulissant au moins un piston axial (16, 18), qui est susceptible d'être actionné par un conducteur du véhicule entre une position arrière de repos et une position avant d'application d'un effort de freinage, et qui est rappelé élastiquement vers sa position arrière de repos, du type dans lequel l'alésage (14) comporte deux joints d'étanchéité avant (30, 34) et arrière (32, 36) qui sont interposés entre le piston (16, 18) et l'alésage (14), le joint d'étanchéité avant (30, 34) délimitant dans l'alésage (14) une chambre d'alimentation arrière (38, 42) et une chambre de pression avant (40, 44), du type dans lequel le corps (12) comporte un conduit radial (46, 52) d'alimentation qui relie un réservoir extérieur de fluide hydraulique à la chambre d'alimentation arrière (38, 42) et qui débouche entre les deux joints d'étanchéité (30, 32, 34, 36), du type dans lequel le corps (12) comporte un perçage (54, 56) d'alimentation d'un circuit de freinage qui débouche dans la chambre de pression avant (40, 44), du type dans lequel le piston comporte un alésage (58, 60) ouvert vers l'avant communiquant d'une part avec la chambre (40, 44) de pression avant et d'autre part avec la périphérie dudit piston (16, 18) par l'intermédiaire d'au moins un perçage (62, 64) qui, lorsque le piston (16, 18) occupe sa position arrière de repos, est agencé entre les deux joints d'étanchéité (30, 32, 34, 36) pour mettre en communication la chambre de pression avant (40, 44) et la chambre d'alimentation arrière (38, 42) et qui, lorsque le piston (16, 18) est mû axialement vers l'avant vers sa position d'application, est susceptible de franchir le joint d'étanchéité avant (30, 34) pour isoler la chambre de pression avant (40, 44) de la chambre d'alimentation arrière (38, 42) et permettre ainsi l'établissement d'une pression de freinage dans la chambre de pression avant (40, 44), du type dans lequel au moins chaque joint d'étanchéité avant (30, 34) est reçu dans une gorge du corps du maître cylindre et comporte trois lèvres concentriques d'orientation axiale, notamment :
- une première lèvre intérieure (80) dont une extrémité libre (82) est agencée au contact de la périphérie du piston (16, 18),
- une deuxième lèvre centrale (84), dont l'extrémité libre (86) est agencée dans une position de repos au contact d'une face avant (88) de la gorge (70,72)
- et une troisième lèvre extérieure (90), dont une extrémité libre (92) est agencée dans une position de repos au contact d'une face (94) de fond périphérique de la gorge (70, 72),
la deuxième lèvre centrale (84) et la troisième lèvre extérieure (90) étant susceptibles, lorsque la chambre avant de pression (40, 44) est soumise à une dépression causée par le retour du piston (16, 18) de sa position avant d'application à sa position de repos ou bien par l'activation d'un dispositif de contrôle de trajectoire faisant partie du circuit de freinage, de se décoller de la face avant (88) et de la face périphérique (94) de fond de la gorge (70, 72) pour permettre la réalimentation de la chambre de pression avant (40, 44) par le réservoir,
**caractérisé en ce que** la gorge (70, 72) comporte un chanfrein (93) qui s'étend de l'alésage jusqu'à au moins une partie intermédiaire (96) de la face avant (88) de la gorge (70, 72) avec laquelle l'extrémité (86) de la deuxième lèvre centrale (84) est en contact dans sa position de repos, et **en ce que** ladite extrémité (86) de la deuxième lèvre centrale (84) est d'une section réduite pour faciliter le décollement par basculement de la deuxième lèvre centrale (84) afin de provoquer le décollement par basculement de la troisième lèvre (90) extérieure dans le but de faciliter la réalimentation du réservoir à l'aide de la chambre de pression avant (40, 44) ou bien la réalimentation de la chambre de pression avant (40, 44) par le réservoir.

2. Maître cylindre (10) selon la revendication précédente, **caractérisé en ce que** le joint (30, 34) comporte une paroi (100) de jonction réunissant les trois lèvres (80, 84, 90) et ce que ladite paroi (100) de jonction comporte une encoche (102), agencée au droit de la deuxième lèvre centrale (84), qui est destinée à faciliter le décollement par basculement de la deuxième lèvre centrale (84) et de la troisième lèvre extérieure (90).

3. Maître cylindre (10) selon l'une des revendications précédentes, **caractérisé en ce que** la deuxième lèvre centrale (84) forme un angle d'inclinaison déterminé avec la première lèvre intérieure (80) et la troisième lèvre (90) extérieure selon lequel elle est inclinée vers la première lèvre intérieure (80).

4. Maître cylindre (10) selon l'une des revendications précédentes, **caractérisé en ce que** l'extrémité (86) de la deuxième lèvre centrale (84) comporte une face extérieure (98) biseautée, tournée vers la troisième lèvre extérieure (90), pour former la section réduite de la deuxième lèvre centrale (84).

5. Maître cylindre (10) selon l'une quelconque des revendications précédentes, **caractérisé en ce qu'**il est de type tandem et comporte dans son corps (12) sensiblement axial un alésage (14) à l'intérieur duquel sont montés coulissants deux pistons axiaux (16, 18), et deux joints (30, 34) d'étanchéité avant qui comportent des deuxième lèvres centrales (84) de section réduite et des encoches (102), et qui sont reçus dans deux gorges (70, 72) chanfreinées associées.

## Claims

1. Brake master cylinder (10) for a motor vehicle, of the type which comprises a substantially axial body (12) inside a bore (14) of which is slideably mounted at least one axial piston (16, 18) which is capable of being actuated by a driver of the vehicle between a rear rest position and a forward braking force application position, and which is returned elastically toward its rear rest position, of the type in which the bore (14) comprises two seals, front (30, 34) and rear (32, 36), which are interposed between the piston (16, 18) and the bore (14), the front seal (30, 34) delimiting, in the bore (14), a rear supply chamber (38, 42) and a front pressure chamber (40, 44), of the type in which the body (12) comprises a radial supply duct (46, 52) which connects an external hydraulic fluid reservoir to the rear supply chamber (38, 42) and which opens out between the two seals (30, 32, 34, 36), of the type in which the body (12) comprises a braking circuit supply hole (54, 56) which opens into the front pressure chamber (40, 44), of the type in which the piston comprises a bore (58, 60), open to the front, communicating on the one hand with the front pressure chamber (40, 44) and on the other hand with the periphery of said piston (16, 18) by way of at least one hole (62, 64) which, when the piston (16, 18) occupies its rear rest position, is arranged between the two seals (30, 32, 34, 36) so as to open communication between the front pressure chamber (40, 44) and the rear supply chamber (38, 42) and which, when the piston (16, 18) is moved axially forward toward its application position, is capable of passing beyond the front seal (30, 34) in order to isolate the front pressure chamber (40, 44) from the rear supply chamber (38, 42) and thus allow a braking pressure to be established in the front pressure chamber (40, 44), of the type in which at least each front seal (30, 34) is accommodated in a groove in the body of the master cylinder and comprises three concentric lips with an axial orientation, in particular,
- a first inner lip (80) of which a free end (82) is arranged in contact with the periphery of the piston (16, 18),
- a second central lip (84) of which the free end (86) is arranged, in a rest position, in contact with a front face (88) of the groove (70, 72), and
- a third outer lip (90) of which a free end (92) is arranged, in a rest position, in contact with a peripheral bottom face (94) of the groove (70, 72),
the second central lip (84) and the third outer lip (90) being capable, when the front pressure chamber (40, 44) is exposed to a partial vacuum caused by the return of the piston (16, 18) from its forward application position to its rest position or else by the activation of a trajectory control device forming part of the braking circuit, of separating from the front face (88) and from the bottom peripheral face (94) of the groove (70, 72) so as to allow the front pressure chamber (40, 44) to be resupplied by the reservoir,
**characterized in that** the groove (70, 72) comprises a chamfer (93) which extends from the bore to at least one intermediate portion (96) of the front face (88) of the groove (70, 72) with which the end (86) of the second central lip (84) is in contact in its rest position, and **in that** said end (86) of the second central lip (84) has a reduced cross section to facilitate the separation by tilting of the second central lip (84) in order to cause the separation by tilting of the third outer lip (90), with the aim of facilitating the resupply of the reservoir by means of the front pressure chamber (40, 44) or else the resupply of the front pressure chamber (40, 44) by the reservoir.

2. Master cylinder (10) according to the preceding claim, **characterized in that** the seal (30, 34) comprises a junction wall (100) joining together the three lips (80, 84, 90), and **in that** said junction wall (100) comprises a notch (102), arranged level with the second central lip (84), which is intended to facilitate the separation by tilting of the second central lip (84) and the third outer lip (90).

3. Master cylinder (10) according to either of the preceding claims, **characterized in that** the second central lip (84) forms a defined angle of inclination with the first inner lip (80) and the third outer lip (90) through which it is inclined toward the first inner lip (80).

4. Master cylinder (10) according to one of the preceding claims, **characterized in that** the end (86) of the second central lip (84) comprises a beveled outer face (98) directed toward the third outer lip (90) so as to form the reduced cross section of the second central lip (84).

5. Master cylinder (10) according to any one of the preceding claims, **characterized in that** it is of the tandem type and comprises, in its substantially axial body (12), a bore (14) inside which two axial pistons (16, 18) are slideably mounted, and two front seals (30, 34) which comprise second central lips (84) of reduced cross section and notches (102), these seals being accommodated in two associated chamfered grooves (70, 72).

## Patentansprüche

1. Hauptbremszylinder (10) für ein Kraftfahrzeug, vom Typ mit einem im Wesentlichen axialen Körper (12) mit einer Öffnung (14), in der mindestens ein axialer Kolben (16, 18) gleitend angebracht ist, der von einem Fahrzeugfahrer zwischen einer hinteren Ruhestellung und einer vorderen Stellung zum Aufbringen einer Bremskraft betätigt werden kann und elastisch in seine hintere Ruhestellung zurückgestellt wird, vom Typ, bei dem die Öffnung (14) zwei vordere Dichtungen (30, 34) und zwei hintere Dichtungen (32, 36) aufweist, die zwischen dem Kolben (16, 18) und der Öffnung (14) angeordnet sind, wobei die vordere Dichtung (30, 34) in der Öffnung (14) eine hintere Versorgungskammer (38, 42) und eine vordere Druckkammer (40, 44) begrenzt, vom Typ, bei dem der Körper (12) eine radiale Versorgungsleitung (46, 52) aufweist, die einen äußeren Hydraulikfluidbehälter mit der hinteren Versorgungskammer (38, 42) verbindet und zwischen den beiden Dichtungen (30, 32, 34, 36) ausmündet, vom Typ, bei dem der Körper (12) eine Bohrung (54, 56) zur Versorgung eines Bremskreises aufweist, die in die vordere Druckkammer (40, 44) mündet, vom Typ, bei dem der Kolben eine nach vorne geöffnete Öffnung (58, 60) aufweist, die zum einen mit der vorderen Druckkammer (40, 44) und zum anderen über mindestens eine Bohrung (62, 64) mit dem Umfang des Kolbens (16, 18) verbunden ist, die in der hinteren Ruhestellung des Kolbens (16, 18) zwischen den beiden Dichtungen (30, 32, 34, 36) angeordnet ist, um die vordere Druckkammer (40, 44) und die hintere Versorgungskammer (38, 42) zu verbinden, und die bei einer axialen Verschiebung des Kolbens (16, 18) nach vorne in seine Beaufschlagungsstellung die vordere Dichtung (30, 34) überwinden kann, um die vordere Druckkammer (40, 44) von der hinteren Versorgungskammer (38, 42) zu trennen und somit den Aufbau eines Bremsdrucks in der vorderen Druckkammer (40, 44) zu ermöglichen, vom Typ, bei dem zumindest jede vordere Dichtung (30, 34) in einer Nut des Hauptzylinderkörpers aufgenommen ist und drei konzentrische, axial ausgerichtete Lippen aufweist, insbesondere:
- eine erste, innere Lippe (80), bei der ein freies Ende (82) so angeordnet ist, dass es den Umfang des Kolbens (16, 18) berührt,
- eine zweite, mittlere Lippe (84), bei der das freie Ende (86) in einer Ruhestellung so angeordnet ist, dass es eine vordere Fläche (88) der Nut (70, 72) berührt,
- und eine dritte, äußere Lippe (90), bei der ein freies Ende (92) in einer Ruhestellung so angeordnet ist, dass es eine hintere Umfangsfläche (94) der Nut (70, 72) berührt,
wobei die zweite, mittlere Lippe (84) und die dritte, äußere Lippe (90) sich von der vorderen Fläche (88) und von der hinteren Umfangsfläche (94) der Nut (70, 72) lösen können, um die erneute Versorgung der vorderen Druckkammer (40, 44) über den Behälter zu ermöglichen, wenn die vordere Druckkammer (40, 44) einem Unterdruck ausgesetzt ist, der durch das Zurückstellen des Kolbens (16, 18) von seiner vorderen Beaufschlagungsstellung in seine Ruhestellung oder durch die Aktivierung einer zum Bremskreis gehörenden Spurkontrollvorrichtung hervorgerufen wird,
**dadurch gekennzeichnet, dass** die Nut (70, 72) eine Abschrägung (93) aufweist, die sich von der Öffnung bis zumindest zu einem Mittelabschnitt (96) der vorderen Fläche (88) der Nut (70, 72) erstreckt, mit dem das Ende (86) der zweiten, mittleren Lippe (84) in ihrer Ruhestellung in Kontakt ist, und das Ende (86) der zweiten, mittleren Lippe (84) einen verringerten Querschnitt hat, so dass das Lösen der zweiten, mittleren Lippe (84) durch Kippen vereinfacht und so das Lösen durch Kippen der dritten, äußeren Lippe (90) hervorgerufen wird, um die erneute Versorgung des Behälters mit Hilfe der vorderen Druckkammer (40, 44) oder die erneute Versorgung der vorderen Druckkammer (40, 44) über den Behälter zu vereinfachen.

2. Hauptzylinder (10) nach dem vorhergehenden Anspruch, **dadurch gekennzeichnet, dass** die Dichtung (30, 34) eine Verbindungswand (100) aufweist, die die drei Lippen (80, 84, 90) vereinigt, und die Verbindungswand (100) eine Einkerbung (102) aufweist, die gegenüber der zweiten, mittleren Lippe (84) angeordnet und dazu vorgesehen ist, das Lösen der zweiten, mittleren Lippe (84) und der dritten, äußeren Lippe (90) durch Kippen zu vereinfachen.

3. Hauptzylinder (10) nach einem der vorhergehenden Ansprüche, **dadurch gekennzeichnet, dass** die zweite, mittlere Lippe (84) mit der ersten, inneren Lippe (80) und der dritten, äußeren Lippe (90) einen vorbestimmten Neigungswinkel bildet, um den sie zur ersten, inneren Lippe (80) hin geneigt ist.

4. Hauptzylinder (10) nach einem der vorhergehenden Ansprüche, **dadurch gekennzeichnet, dass** das Ende (86) der zweiten, mittleren Lippe (84) eine abgefaste Außenfläche (98) aufweist, die zur dritten, äußeren Lippe (90) gewandt ist, so dass der verringerte Querschnitt der zweiten, mittleren Lippe (84) gebildet ist.

5. Hauptzylinder (10) nach einem der vorhergehenden Ansprüche, **dadurch gekennzeichnet, dass** er ein Tandem-Hauptzylinder ist und in seinem im Wesentlichen axialen Körper (12) eine Öffnung (14) aufweist, in der zwei axiale Kolben (16, 18) gleitend angebracht sind, sowie zwei vordere Dichtungen (30, 34), die zweite, mittlere Lippen (84) mit verringertem Querschnitt und Einkerbungen (102) aufweisen und in zwei zugeordnete abgeschrägte Nuten (70, 72) aufgenommen sind.
